# FASCICULE DE BREVET EUROPEEN

(11) **EP 0 931 688 B1**
(45) Date de publication et mention de la délivrance du brevet: **03.08.2011**
(21) Numéro de dépôt: 99400157.6
(22) Date de dépôt: 22.01.1999
(51) Int. Cl.: B60L 9/00, B60L 3/00

(54) **Chaîne de traction en tension comportant des bus d'alimentation d'un engin de traction électrique**
Spannungsantriebssystem mit einer Stromsammelschiene für ein elektrisches Triebfahrzeug
Voltage traction system with a power bus bar for an electric traction unit

(30) Priorité: 26.01.1998 FR 9800773
(43) Date de publication de la demande: 28.07.1999
(73) Titulaire: ALSTOM Transport SA, 75116 Paris (FR)
(72) Inventeur: Liu, Rong Fan, 64000 Pau (FR)
(74) Mandataire: Moncheny, Michel

(56) Documents cités:
- SCHMIDT D: "GERMANY'S INTERCITY EXPRESS WITH ABB THREE-PHASE PROPULSION" ABB REVIEW, no. 10, 1 janvier 1991, pages 3-10, XP000276811

## Description

La présente invention concerne les chaînes de traction électrique, en général, et porte, plus particulièrement, sur une chaîne de traction en tension comportant des bus d'alimentation d'un engin de traction électrique, telle que divulguée dans le document intitulé "Germany's intercity express ABB three-phase propulsion" de D.Schmidt.

Dans le domaine des chaînes de traction électrique, la technologie GTO (GATE TURN OFF) favorise la mise en oeuvre de schémas électriques de puissance d'une chaîne de traction électrique comportant des bus du type bus communs.

La technologie IGBT (INSULATE GATE BIPOLAR TRANSISTOR) est susceptible de favoriser la mise en oeuvre de schémas électriques de puissance d'une chaîne de traction électrique comportant des bus du type bus séparés.

Les schémas électriques de puissance d'une chaîne de traction électrique de l'art antérieur comportant des bus du type bus communs ont pour avantages que:
- l'ensemble de la puissance de traction se partage entre les Ponts monophasés à commutation forcée (ci-après PMCF) sur un même bus, il n'y a donc pas de surintensité au niveau des PMCF en cas de dispersion des puissances de traction de chaque onduleur,
- dans le cas d'un bus composé d'un nombre N de PMCF, l'entrelacement des N PMCF permet de minimiser toutes les raies de la famille 1 à la famille N-1, d'où une performance du point de vue de l'absence d'oscillations sur le réseau caténaire d'autant plus élevée que le niveau de la valeur du courant primaire IPE est assuré,
- dans le cas d'un PMCF isolé, l'effort total de démarrage est toujours assuré tout en respectant la qualité de l'entrelacement des PMCF restants,
- l'auxiliaire est facile à installer sur le bus continu.

De tels schémas électriques de puissance d'une chaîne de traction électrique de l'art antérieur comportant des bus du type bus communs ont pour inconvénients que:
- un court-circuit du bus commun entraîne un sur-couple sur tous les moteurs de traction,
- du fait que la commutation des IGBT a besoin d'une faible inductance du circuit, le court-circuit sur l'ensemble des condensateurs du bus commun peut provoquer une surintensité phénoménale.

Les schémas électriques de puissance d'une chaîne de traction électrique de l'art antérieur comportant des bus du type bus séparés par essieu ont pour avantages que:
- en cas de court-circuit d'un bus, la surintensité est minimisée et le sur-couple du moteur est limité sur un seul onduleur, il n'y a donc pas d'influence sur les autres bus.

De tels schémas électriques de puissance d'une chaîne de traction électrique de l'art antérieur comportant des bus du type bus séparés par essieu ont pour inconvénients que:
- les fonctionnements de chaque bus étant indépendants, du fait des dispersions des mesures des tensions continues et des puissances de traction sur chaque onduleur, la qualité de l'entrelacement des N PMCF sur N bus séparés ne peut pas assurer, les harmoniques et la valeur du courant primaire IPE sont donc dégradés,
- du fait du même problème de l'entrelacement, les PMCF devrons être légèrement sur-dimensionnés,
- les auxiliaires sont difficiles à installés sur les bus séparés.

Le tableau 1 ci-après regroupe l'ensemble des performances des différents schémas électriques de puissance d'une chaîne de traction électrique de l'art antérieur.

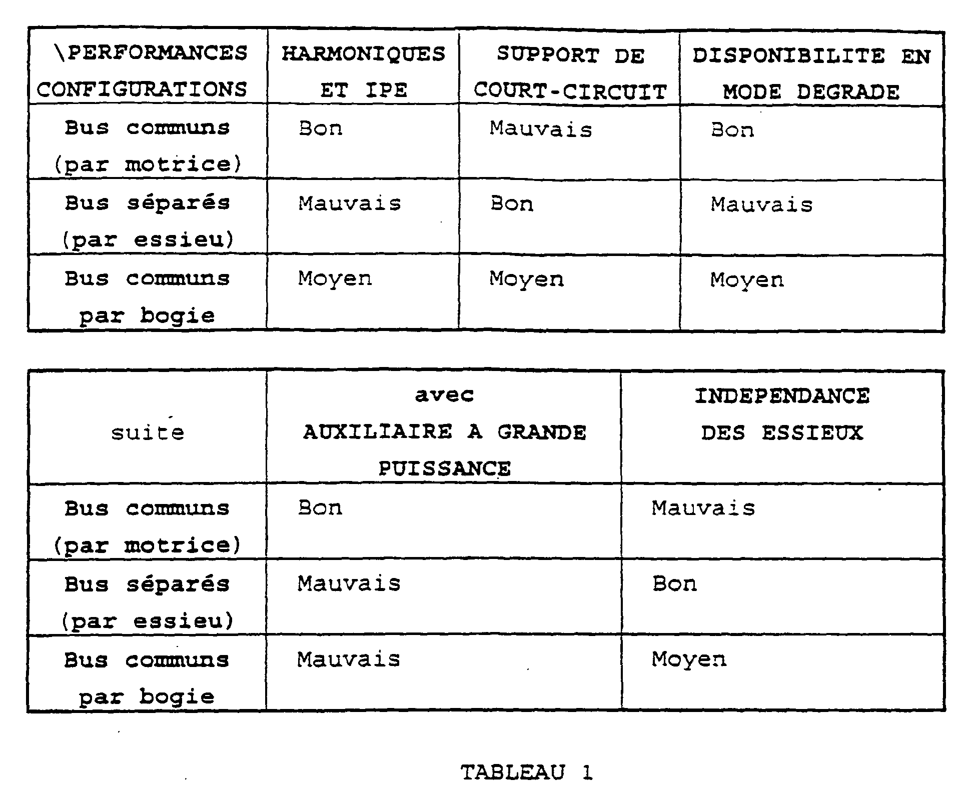

Aussi un but de l'invention est-il une chaîne de traction électrique comportant des bus d'alimentation d'un engin de traction électrique présentant les avantages des chaînes de traction comportant des bus d'alimentation du type bus communs selon l'art antérieur, ainsi que les avantages des chaînes de traction comportant des bus d'alimentation du type bus séparés selon l'art antérieur.

Un autre but de l'invention est une chaîne de traction électrique comportant des bus d'alimentation d'un engin de traction électrique ne présentant pas les inconvénients des chaînes de traction électrique selon l'art antérieur.

Un autre but de l'invention est une chaîne de traction électrique comportant des bus d'alimentation d'un engin de traction électrique dont l'ensemble des performances sont améliorées.

Conformément à l'invention, la chaîne de traction en tension comportant des bus d'alimentation d'un engin de traction électrique selon la revendication 1.

Un avantage de la chaîne de traction en tension comportant des bus d'alimentation d'un engin de traction électrique de l'invention est une meilleure performance des puissances autant que des harmoniques.

D'autres buts, caractéristiques et avantages de l'invention apparaîtront à la lecture de la description du mode de réalisation préféré d'une chaîne de traction en tension comportant des bus d'alimentation d'un engin de traction électrique, description faite en liaison avec les dessins dans lesquels:
- la figure 1 est un schéma électrique d'une chaîne de traction électrique comportant des bus du type bus séparés conforme à l'art antérieur,
- les figures 1A à 1D montrent, respectivement, les niveaux d'harmoniques et la forme des quatre courants secondaires obtenus par le schéma électrique de la figure 1,
- la figure 2 est un schéma électrique d'une chaîne de traction électrique comportant des bus du type bus communs par bogie conforme à l'art antérieur,
- les figures 2A à 2D montrent, respectivement, les niveaux d'harmoniques et la forme des quatre courants secondaires obtenus par le schéma électrique de la figure 2,
- la figure 3 est un schéma électrique d'une chaîne de traction électrique comportant des bus du type bus communs conforme à l'art antérieur,
- les figures 3A et 3B montrent, respectivement, les niveaux d'harmoniques et la forme des quatre courants secondaires obtenus par le schéma électrique de la figure 3,
- la figure 4 est un schéma électrique d'un premier mode de réalisation préféré d'une chaîne de traction électrique comportant des bus du type bus semi-communs conforme à l'invention,
- les figures 4A et 4B montrent, respectivement, les niveaux d'harmoniques et la forme des quatre courants secondaires obtenus par le schéma électrique de la figure 4,
- la figure 5 est un schéma électrique d'un autre mode de réalisation préféré de la chaîne de traction électrique comportant deux bus du type bus semi-communs conforme à l'invention,
- les figures 5A à 5C montrent, respectivement, les schémas équivalents du schéma électrique de la figure 5, dans le cas des courants continus, des courants 2F et d'un court-circuit du bus supérieur,
- la figure 6 est un schéma électrique d'un autre mode de réalisation préféré d'une chaîne de traction électrique comportant des bus du type bus semi-communs,
- la figure 7 est un schéma électrique d'un autre mode de réalisation préféré d'une chaîne de traction électrique comportant des bus du type bus semi-communs conforme à l'invention.

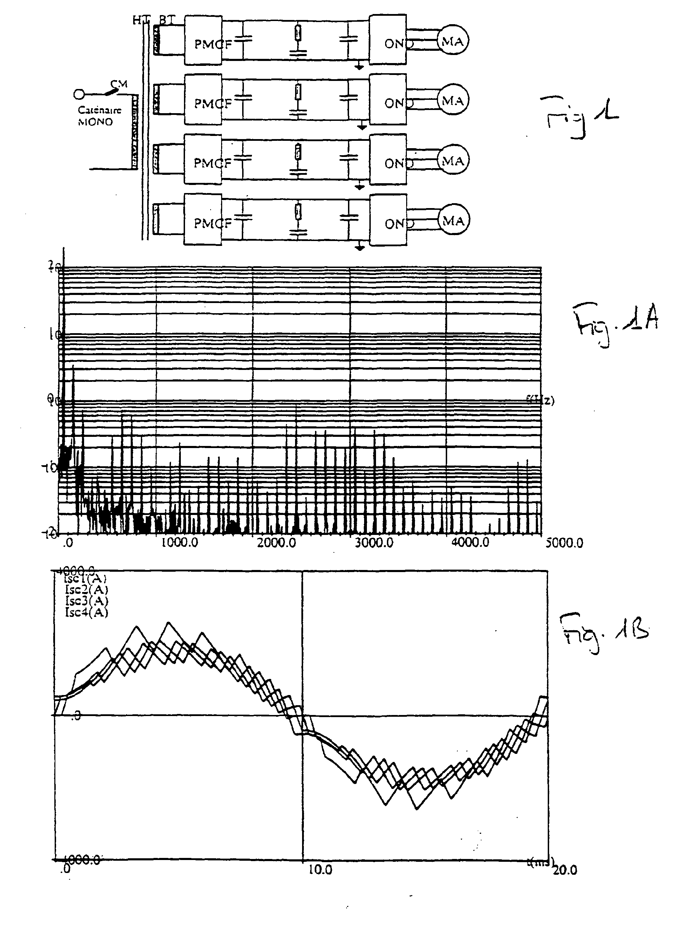

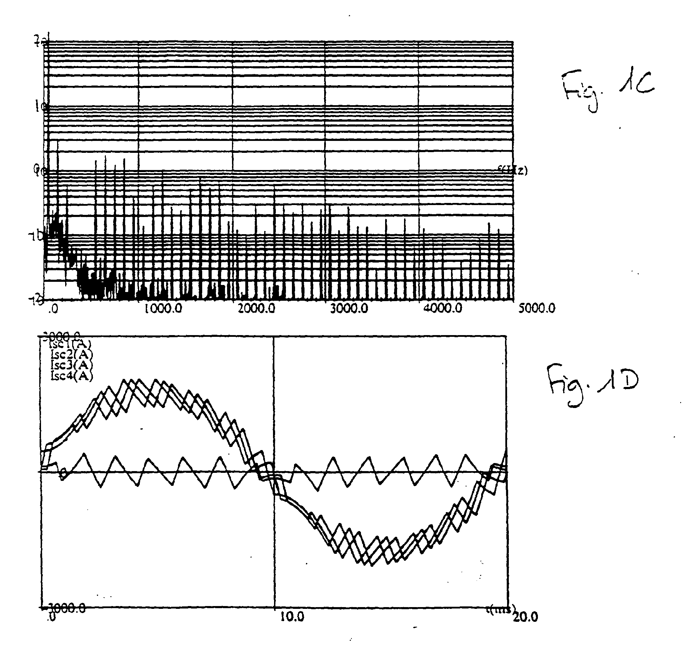

La figure 1 est un schéma électrique d'une chaîne de traction électrique comportant des bus du type bus séparés conforme à l'art antérieur.

Cette figure 1 montre une chaîne de traction à quatre bus, chaque bus comportant un PMCF et un filtre 2F.

Les figures 1A à 1D montrent, respectivement, les niveaux d'harmoniques et la forme des quatre courants secondaires obtenus par le schéma électrique de la figure 1 en fonctionnement normal avec un PMCF arrêté.

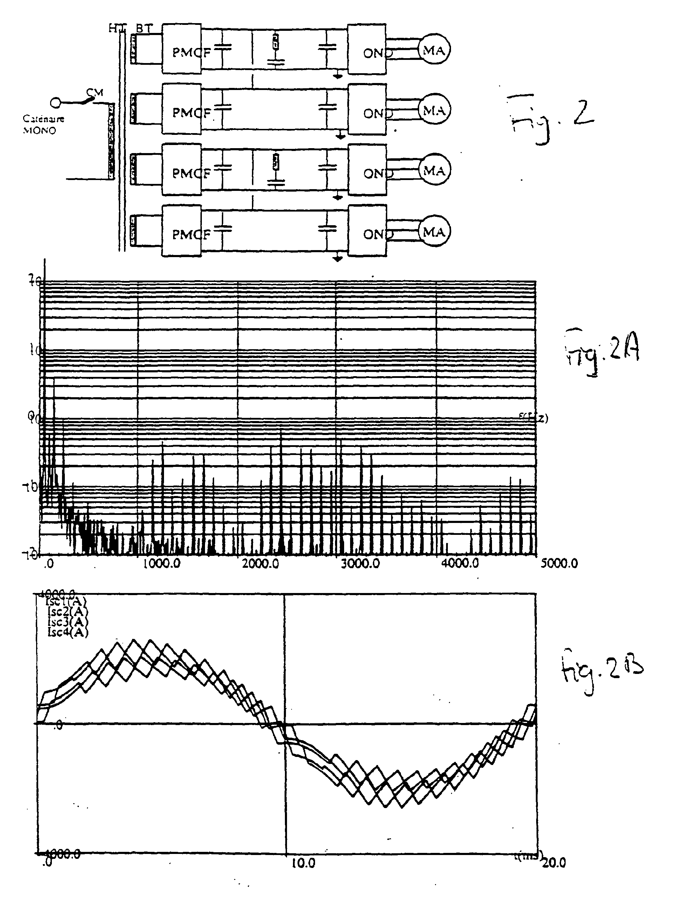

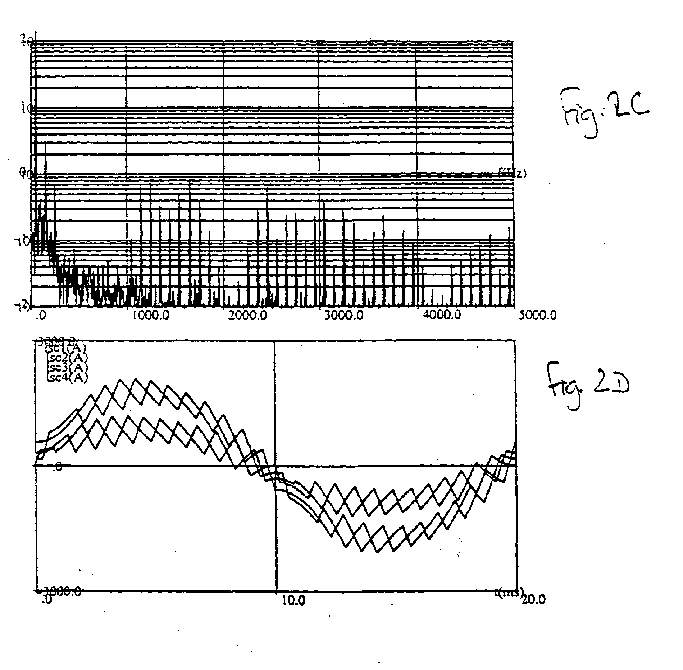

La figure 2 est un schéma électrique d'une chaîne de traction électrique comportant des bus du type bus communs par bogie conforme à l'art antérieur.

Cette figure 2 montre une chaîne de traction à quatre bus, chaque bus comportant un PMCF et un filtre 2F, les bus étant configurés par paire de manière à ce que chaque paire de bus est associée à deux PMCF.

Les figures 2A à 2D montrent, respectivement, les niveaux d'harmoniques et la forme des quatre courants secondaires obtenus par le schéma électrique de la figure 2 en fonctionnement normal avec un moteur arrété.

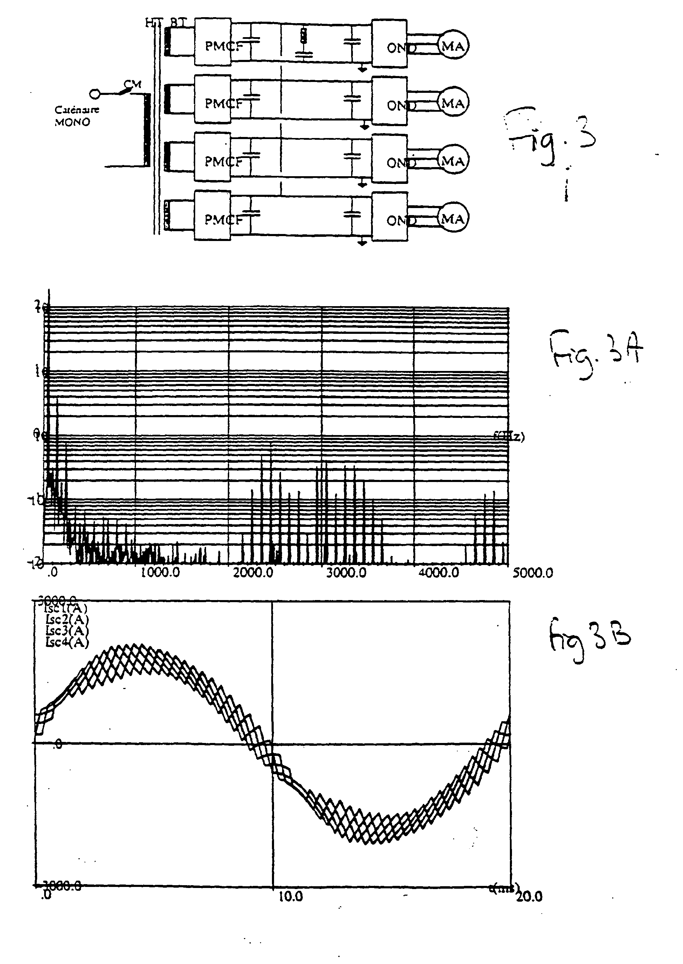

La figure 3 est un schéma électrique d'une chaîne de traction électrique comportant des bus du type bus communs conforme à l'art antérieur.

Cette figure 3 montre une chaîne de traction à quatre bus, chaque bus comportant un PMCF, l'un uniquement des bus comportant un filtre 2F, les bus étant configurés de manière à ce que l'ensemble des bus est associé aux quatre PMCF.

Les figures 3A et 3B montrent, respectivement, les niveaux d'harmoniques et la forme des quatre courants secondaires obtenus par le schéma électrique de la figure 3.

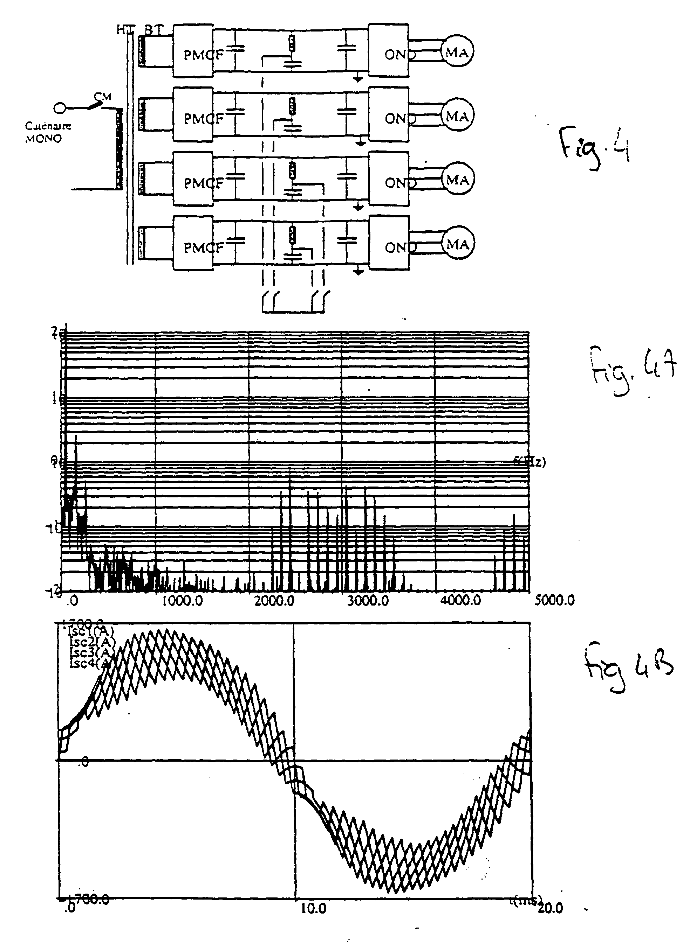

La figure 4 est un schéma électrique d'un premier mode de réalisation préféré d'une chaîne de traction électrique comportant des bus du type bus semi-communs conforme à l'invention.

La chaîne de traction en tension comporte des bus d'alimentation d'un engin de traction électrique.

Les bus d'alimentation comportent chacun un filtre 2F dont les points milieux sont reliés entre eux, de préférence au moyens d'éléments interrupteurs.

La figure 4 montre donc une chaîne de traction à quatre bus, chaque bus comportant un PMCF et un filtre 2F, les filtres 2F étant configurés de manière à ce que les points milieux des filtres 2F de l'ensemble des bus d'alimentation sont reliés entre eux.

Les figures 4A et 4B montrent, respectivement, les niveaux d'harmoniques et la forme des quatre courants secondaires obtenus par le schéma électrique de la figure 4.

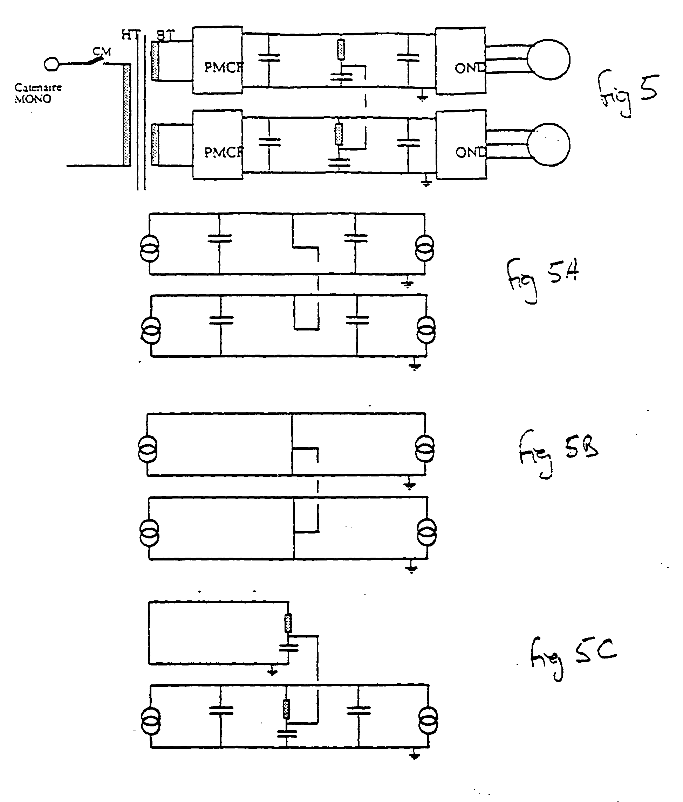

La figure 5 représente le schéma électrique du premier mode de réalisation préféré de la chaîne de traction électrique comportant deux bus du type bus semi-communs conforme à l'invention.

Les figures 5A à 5C montrentles schémas équivalents du schéma électrique de la figure 5, dans le cas, respectivement, des courants continus, des courants 2F et d'un court-circuit du bus supérieur.

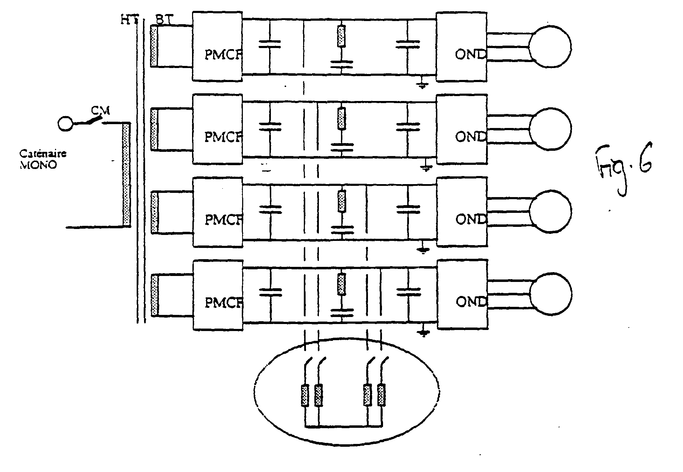

La figure 6 est un schéma électrique d'un autre mode de réalisation préféré d'une chaîne de traction électrique comportant des bus du type bus semi-communs.

Conformément à cet autre mode de réalisation préféré de la chaîne de traction électrique les bus d'alimentation sont directement reliés par l'intermédiaire d'éléments selfiques.

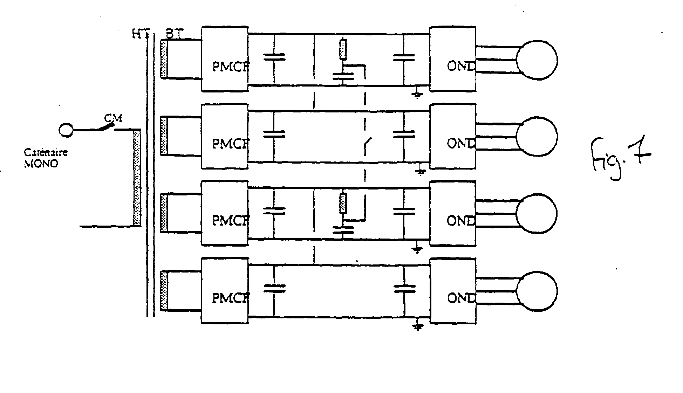

La figure 7 est un schéma électrique d'un autre mode de réalisation préféré d'une chaîne de traction électrique comportant des bus du type bus semi-communs conforme à l'invention.

Conformément à cet autre mode de réalisation préféré de la chaîne de traction électrique conforme à l'invention, une première moitié des bus d'alimentation comporte chacun un filtre 2F, l'autre moitié des bus d'alimentation est reliée par paire à la première moitié des bus d'alimentation et les points milieux des filtres 2F de la première moitié des bus d'alimentation sont reliés entre eux.

### SIMULATIONS

Les simulations définies ci-après sont réalisées sur quatre types de schéma électriques de puissance d'une chaîne de traction électrique de l'art antérieur comportant des bus du type bus
• Configuration des chaînes de traction:
Option 1 selon l'art antérieur:
Chaîne de traction à quatre bus, chaque bus comportant un PMCF et un filtre 2F (Figure 1).
Option 2 selon l'art antérieur:
Chaîne de traction à quatre bus, chaque bus comportant un PMCF et un filtre 2F, les bus étant configurés par paire de manière à ce que chaque paire de bus est associée à deux PMCF (Figure 2).
Option 3 selon l'art antérieur:
Chaîne de traction à quatre bus, chaque bus comportant un PMCF, l'un uniquement des bus comportant un filtre 2F, les bus étant configurés de manière à ce que l'ensemble des bus est associé aux quatre PMCF (Figure 3).
Option 4 conforme à l'invention:
Chaîne de- traction à quatre bus, chaque bus comportant un PMCF et un filtre 2F, les fiertés 2F étant configurés de manière à ce que les points milieux des filtres 2F de l'ensemble des bus d'alimentation sont reliés entre eux (Figure 4).

### Résultats de la simulation dans le cas où il existe de petites dispersions entre les bus.

Le tableau 2 ci-après indique les résultats de la simulation pour des dispersions limitées entre les bus continus.

**TABLEAU 2**

| | **OPTION 1** | **OPTION 2** | **OPTION 3** | **OPTION 4** |
|---|---|---|---|---|
| **Nombre de bus** | 4 | 2 | 1 | - |
| **Nombre de PMCF et d'ondulateurs par bus** | 1 | 2 | 4 | - |
| **Nombre de PMCF entrelacés** | 4 | 4 | 4 | - |
| **Valeur de la dispersion de Uc sur le bus 1** | 10% | 10% | 0% | - |
| **Valeur de la dispersion de la puissance sur le bus 1** | 10% | 10% | 0% | - |
| **Valeur du courant primaire IPE** | mauvais | moyen | bon | - |
| **Spectre du courant primaire IPE** | Fig. 1A | Fig. 2A | Fig. 3A | - |
| **Courbes des quatre courants secondaires** | Fig. 1B | Fig. 2B | Fig. 3B | - |

La comparaison des niveaux d'harmoniques pour de petites dispersions dues à une erreur de mesure de Uc ou de pilotage des onduleurs montre qu'un déséquilibre de l'ordre de 10% de Uc et de la puissance sur un bus laisse apparaître:
- une première famille de raies et 58% d'augmentation de la valeur du courant primaire IPE, dans le cas de quatre bus séparés composés chacun d'un PMCF,
- une deuxième famille de raies et 35% d'augmentation de la valeur du courant primaire IPE, dans le cas de deux bus séparés composés chacun de deux PMCF.

Les résultats semblent acceptables pour le bus séparés à condition que la caténaire soit parfaite.

Toutefois, si la locomotive est loin de la sous-station sous une caténaire, les harmoniques et l'IPE du courant risque de sensiblement se dégrader.

### Résultats de la simulation dans le cas où il existe un déséquilibre important entre les bus.

Le tableau 3 ci-après indique les résultats de simulation pour une différence de puissance importante entre onduleurs.

**TABLEAU 3**

| | **OPTION 1** | **OPTION 2** | **OPTION 3** | **OPTION 4** |
|---|---|---|---|---|
| **Nombre de bus** | 4 | 2 | - | 1 |
| **Nombre de PMCF et d'ondulateurs par bus** | 1 | 2 | - | 4 |
| **Nombre de PMCF entrelacés** | 4 | 4 | - | 4 |
| **Valeur de la dispersion de Uc sur le bus 1** | 0% | 0% | - | 0 |
| **Valeur de la dispersion de la puissance sur le bus 1** | 100% | 50% | - | 0 |
| **Valeur du courant primaire IPE** | mauvais | moyen | - | bon |
| **Spectre du courant primaire IPE** | Fig. 1C | Fig. 2C | - | Fig. 4A |
| **Courbes des quatre courants secondaires** | Fig. 1D | Fig. 2D | - | Fig. 4B |

Dans le cas où la différence de puissance est importante entre les bus séparés, les harmoniques et l'IPE ne peuvent plus être assurés.

Concernant l'option 1, si l'onduleur sur le bus 1 est coupé (cas fictif), l'IPE peut monter quatre fois plus qu'à la normale.

Concernant l'option 2, si l'onduleur sur le bus 1 est coupé, l'IPE peut monter deux fois plus que la normale.

Ce type de situation peut éventuellement arriver lorsque la puissance de l'auxiliaire liée aux bus continus de traction est importante.

L'option 4 conforme à l'invention, dite schéma en bus séparés-communs, montre une performance identique au schéma en bus communs.

La figure 5 est un schéma électrique d'un autre mode de réalisation préféré de la chaîne de traction électrique comportant deux bus du type bus semi-communs conforme à l'invention.

Les figures 5A à 5C montrent, respectivement, les schémas équivalents du schéma électrique de la figure 5, dans le cas des courants continus, des courants 2F et d'un court-circuit du bus supérieur.

Le schéma électrique de la chaîne de traction électrique comportant deux bus dû type bus semi-communs conforme à l'invention comporte une liaison entre les bus individuels par des selfs.

Conformément au premier mode de réalisation préféré du schéma électrique d'une chaîne de traction électrique comportant des bus du type bus semi-communs conforme à l'invention, la chaîne de traction électrique comporte une liaison entre les filtres 2F (figure 4).

L'avantage de ce premier mode de réalisation préféré du schéma électrique est de conserver les avantage des bus séparés ainsi que les avantage des bus communs sans ajouter des équipements importants.

Dans le cas d'un fonctionnement en régime permanent de la chaîne-de traction électrique conforme à l'invention, la liaison des filtres 2F permet un passage des énergies entre les bus et impose l'unification des tension continue Uc.

Les courants des PMCF sont donc unifiés, l'avantage de la chaîne de traction électrique à bus communs est ainsi conservé.

Dans le cas d'un court-circuit d'un bus continu, le débit d'énergie des autres bus passe par les selfs 2F.

L'avantage de la chaîne de traction électrique à bus séparés ainsi est conservé.

### CONCLUSIONS

Afin d'éviter les surintensités en cas de court-circuit du bus continu, le choix du schéma avec bus continu-séparé dégrade la performance des harmoniques et de l'IPE à cause de la dispersion des tensions Uc et de charges.

Toutefois, du fait de l'apparition d'harmoniques à faibles rangs, la dégradation risque de s'alourdir en cas de résonance de la caténaire.

Aussi est-ce le mérite de la demanderesse que de proposer un schéma de puissance, dit à bus communs, basé sur le schéma dit à bus séparés, la particularité de ce schéma étant de mettre en commun les condensateurs 2F sur tous les bus.

Les résultats de simulation montrent donc que le schéma de puissance à bus semi-communs conforme à l'invention présente les mêmes harmoniques et la même valeur de l'IPE que celles présentées par le schéma en bus communs de l'art antérieur tout en préservant les avantages du schéma de puissance à bus séparés de l'art antérieur en ce qui concerne les états transitoires.

## Revendications

1. Chaîne de traction en tension comportant des bus d'alimentation d'un engin de traction électrique, dans laquelle au moins une partie desdits bus d'alimentation comporte un filtre, **caractérisée en ce que** les points milieu desdits filtres desdits bus d'alimentation sont reliés entre eux.

2. Chaîne de traction en tension selon la revendication 1, **caractérisée en ce que** ladite partie constitue une première moitié desdits bus d'alimentation, l'autre moitié desdits bus d'alimentation étant reliée par paire à ladite première moitié desdits bus d'alimentation.

3. Chaîne de traction en tension selon la revendication 1 ou 2, **caractérisée en ce que** le ou chaque filtre comporte un condensateur connecté en série avec une self.

## Claims

1. Traction system in voltage mode including power supply buses of an electric traction vehicle, in which at least a part of the said power supply buses includes a filter, **characterized in that** the mid-points of the said filters of the said power supply buses are linked together.

2. Traction system in voltage mode according to claim 1, **characterized in that** the said part constitutes a first half of the said power supply buses, the other half of the said power supply buses being linked in pairs to the said first half of the said power supply buses,

3. Traction system in voltage mode according to claim 1 or 2, **characterized in that** the or each filter includes a capacitor connected in series to an induction coil.

## Patentansprüche

1. Spannungsantriebssystem mit Versorgungssammetschienen eines elektrischen Triebfahrzeugs, bei dem wenigstens ein Teil der genannten Versorgungssammeischienen ein Filter umfasst,
**dadurch gekennzeichnet, dass** die Mittelpunkte der genannten Timer der genannten Versorgungssammeischienen miteinander verbunden sind.

2. Spannungsantriebssystem nach Anspruch 1, **dadurch gekennzeichnet, dass** der genannte Teil eine erste Hälfte der genannten Versorgungssammelschienen bildet, wobei die andere Hälfte der genannten Versorgungssammelschienen paarweise mit der genannten ersten Hälfte der genannten Versorgungssammelschienen verbunden ist.

3. Spannungsantriebssystem nach Anspruch 1 oder 2, **dadurch gekennzeichnet, dass** das oder jedes Filter einen in Serie mit einer Drossel verbundenen Kondensator umfasst.
